# EUROPÄISCHE PATENTSCHRIFT

(11) **EP 1 903 256 B1**
(45) Veröffentlichungstag und Bekanntmachung des Hinweises auf die Patenterteilung: **18.05.2011**
(21) Anmeldenummer: 07016844.8
(22) Anmeldetag: 28.08.2007
(51) Int. Cl.: F16H 25/20, F16K 31/04

(54) **Motorgesteuerter Schwenkantrieb**
Powered swivel drive
Commande pivotante motorisée

(30) Priorität: 19.09.2006 DE 102006043994
(43) Veröffentlichungstag der Anmeldung: 26.03.2008
(73) Patentinhaber: GEMÜ Gebrüder Müller Apparatebau GmbH & Co. KG, 74653 Ingelfingen (DE)
(72) Erfinder: Müller, Fritz, 74665 Ingelfingen (DE)
(74) Vertreter: Dreiss

(56) Entgegenhaltungen:
- DE-A1- 3 615 368
- US-A- 3 651 711
- US-A- 4 085 624

## Beschreibung

Die Erfindung betrifft einen motorgesteuerten Schwenkantrieb mit den Merkmalen des Oberbegriffs des Anspruchs 1.

Es sind viele Arten von Schwenkantrieben bekannt (US 3,651,711 und US 4,085,624). Beispielsweise gibt es Schwenkantriebe, die zum Betätigen von Klappen und Kugelhähnen eingesetzt werden. Solche Schwenkantriebe können beispielsweise hydraulisch oder mittels eines Elektromotors gesteuert werden. Ein Beispiel zeigt das Dokument DE 3615368 A1, welches alle Merkmale des Oberbegriffs des Anspruchs 1 beinhaltet.

Es ist eine Aufgabe der Erfindung, einen kompakt aufgebauten motorgesteuerten Schwenkantrieb zur Verfügung zu stellen.

Diese Aufgabe wird erfindungsgemäß durch den im Anspruch 1 angegebene Schwenkantrieb gelöst. Die abhängigen Ansprüche 2 bis 12 zeigen spezielle Ausführungsformen des Schwenkantriebs gemäß Anspruch 1.

Der erfindungsgemäße Schwenkantrieb ist in einem Gehäuse vorgesehen und weist einen Motor auf, der eine Antriebskraft erzeugt, die über eine Getriebeeinrichtung zu einer durch den Schwenkantrieb zu betätigenden Armatur zugeführt wird. Insbesondere wird die Antriebskraft über eine Getriebeeinrichtung zu einer Linearbewegungseinrichtung übertragen, deren lineare Bewegung über eine Schwinge in eine vorbestimmte Drehbewegung einer an der Schwinge gelagerten Schwenkeinrichtung umgewandelt wird. Die Schwenkeinrichtung steht dabei mit der Nabe in Verbindung, ist als kompakt verschraubtes Schwingengehäuse ausgebildet und ist mit Führungsrollen versehen, mit welchen die Schwenkeinrichtung bei einer Bewegung der Schwinge an deren Äußeren geführt wird.

Der erfindungsgemäße motorgesteuerte Schwenkantrieb ist einfach und kompakt aufgebaut.

Die vorbestimmte Drehbewegung der Schwenkeinrichtung erfolgt vorzugsweise über einen Winkel von im Wesentlichen 90°.

Die Getriebeeinrichtung weist vorzugsweise ein mit dem Motor über einen Transaxialantrieb in Verbindung stehendes Getriebe und ein mit diesem in Verbindung stehenden Zahnflachriemenantrieb auf.

Die Linearbewegungseinrichtung weist vorzugsweise eine durch den Zahnflachriemenantrieb drehend angetriebene Kugelrollspindel und eine auf dieser laufende Kugelgewindemutter auf.

Die Schwinge ist vorzugsweise an ihrem einen Ende drehbar an der Kugelgewindemutter gelagert und weist weiterhin in ihrer Längsrichtung eine Führungsöffnung zur Führung der Schwinge um eine im Gehäuse angebrachte Nabe auf. Die Nabe ist insbesondere im Gehäuse fest in einer Aufnahme angebracht. Die Nabe weist vorzugsweise eine Verzahnung auf. Vorzugsweise hat diese Verzahnung acht Zähne.

Die Übertragung der vom Motor erzeugten Antriebskraft bis zur Schwenkeinrichtung erfolgt auf besonders einfache Weise und die Getriebeeinrichtung, die Linearbewegungseinrichtung und die Schwinge benötigen wenig Platz im Gehäuse.

Vorzugsweise ist eine Positionserfassungseinrichtung vorgesehen, die Endpositionen der Linearbewegungseinrichtung erfasst und eine Richtungsumkehr der linearen Bewegung veranlasst. Dabei weist die Positionserfassungseinrichtung insbesondere einen elektrischen.Kontaktschalter auf. Weiterhin ist vorzugsweise ein Anschlussstück der Nabe zur Verbindung der Schwenkeinrichtung mit einer durch den Schwenkantrieb zu betätigenden Armatur vorgesehen.

Des weiteren ist vorzugsweise im Gehäuse noch ein Kasten für die zur Betätigung und Steuerung des Schwenkantriebs erforderliche Elektronik vorgesehen.

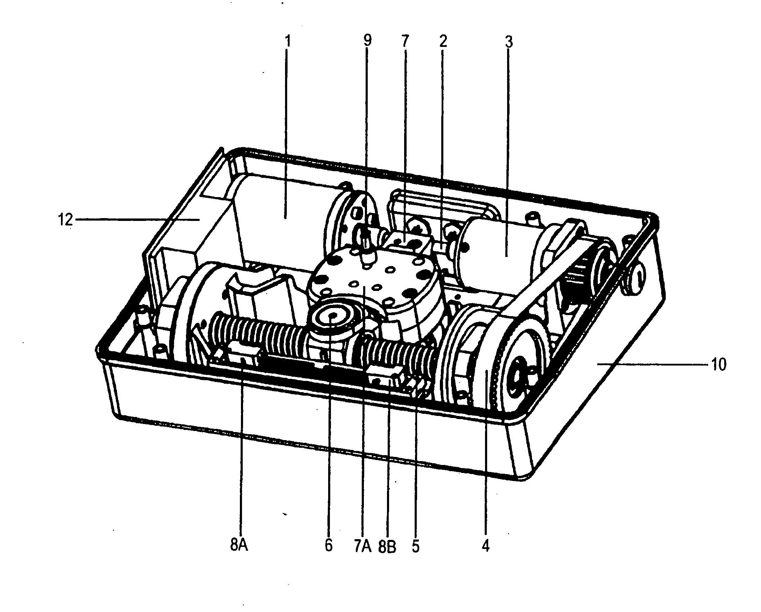

Die angegebenen und weitere Merkmale und Einzelheiten der Erfindung ergeben sich aus der folgenden detaillierten Beschreibung und der beigefügten Zeichnung, die Merkmale der vorliegenden Erfindung anhand eines Beispiels darstellt, wobei die Zeichnung eine Schrägansicht eines motorgesteuerten Schwenkantriebs zeigt.

Im folgenden wird die vorliegende Erfindung anhand einer bevorzugten Ausführungsform unter Bezugnahme auf die beigefügte Zeichnung detailliert erklärt.

Die Zeichnung zeigt jeweils Schrägansichten eines motorgesteuerten Schwenkantriebs gemäß der vorliegenden Erfindung. Der Schwenkantrieb ist in einem Gehäuse 10 vorgesehen. Dabei erzeugt ein Motor 1 eine Antriebskraft, die über eine Getriebeeinrichtung 3, 4 zu einer Linearbewegungseinrichtung 5, 6 übertragen wird. Insbesondere wird die vom Motor erzeugte Antriebskraft des Motors 1 über einen Transaxialantrieb 2 zu einem Getriebe 3 und dann zu einem mit diesem Getriebe 3 in Verbindung stehenden Zahnflachriemenantrieb 4 übertragen. Der Motor 1 kann insbesondere klein und leicht sein, so dass für ihn im Gehäuse 10 nicht viel Platz vorgesehen werden muss.

Die Linearbewegungseinrichtung 5, 6 ist aus einer durch den Zahnflachriemenantrieb 4 drehend angetriebenen Kugelrollspindel 5 und einer auf dieser laufenden Kugelgewindemutter 6 ausgebildet. Die durch die drehend angetriebene Kugelrollspindel 5 verursachte lineare Bewegung der auf dieser laufenden Kugelgewindemutter 6 wird dann über eine Schwinge 7, die an ihrem einen Ende drehbar an der Kugelgewindemutter 6 gelagert ist, in eine vorbestimmte Drehbewegung einer an der Schwinge 7 gelagerten Schwenkeinrichtung 7A.

Die Drehbewegung, die insbesondere über einen Winkel von im Wesentlichen 90° erfolgt, wird dadurch bewirkt, dass die Schwinge 7 in ihrer Längsrichtung eine Führungsöffnung zur Führung der Schwinge 7 um eine im Gehäuse 10 angebrachte Nabe 9 aufweist. Diese Nabe 9 ist im Gehäuse 10 in einer Aufnahme angebracht. Dabei weist die Nabe 9 für den Anschluss einer Spindel einer durch den Schwenkantrieb zu betätigenden Dreharmatur eine Verzahnung auf, die vorzugsweise acht Zähne hat.

Weiterhin ist eine Positionserfassungseinrichtung 8A, 8B vorgesehen, die hier als jeweilige elektrische Kontaktschalter am linken Ende und am rechten Ende der Kugelrollspindel 5 ausgebildet sind. Diese Enden stellen jeweilige Endpositionen der linearen Bewegung der auf der Kugelrollspindel 5 laufenden Kugelgewindemutter 6 dar, die den Kontaktschalter beim Erreichen einer Endposition kontaktiert, wodurch dann eine Richtungsumkehr der linearen Bewegung veranlasst wird. In der Zeichnung ist die Kugelgewindemutter 6 bei der Mittenposition der Kugelrollspindel 5 zu sehen, bei welcher keiner der Kontaktschalter 8A, 8B kontaktiert wird.

In der Zeichnung ist als erste bevorzugte Ausführungsform eine Schwenkeinrichtung 7A derart gezeigt, dass sie plattenförmig als kompakt verschraubtes Schwingengehäuse ausgebildet ist und mit der Nabe 9 in Verbindung steht. Die Schwenkeinrichtung 7A ist mit Führungsrollen versehen, mit welchen die Schwenkeinrichtung 7A bei einer durch die Linearbewegungseinrichtung 5, 6 veranlasste Bewegung der Schwinge 7 am Äußeren der Schwinge 7 geführt wird.

In der Zeichnung ist ein Anschlussstück der Nabe 9 zur Verbindung der Schwenkeinrichtung 7A, 7B mit einer durch den Schwenkantrieb zu betätigenden Armatur vorgesehen.

Weiterhin ist im Gehäuse 10 des erfindungsgemäßen Schwenkantriebs noch ein Kasten 12 für Elektronik vorgesehen, die für die Betätigung und Steuerung des Schwenkantriebs erforderlich ist. Die Elektronik ist unter anderem dafür nötig, die durch die Positionserfassungseinrichtung 8A, 8B veranlasste Richtungsumkehr zu bewirken.

Der erfindungsgemäße motorgesteuerte Schwenkantrieb ist kompakt und einfach aufgebaut und kann auf einfache Weise bedient werden. Der motorgesteuerte Schwenkantrieb ist besonderes bevorzugt für eine Schließkraft von bis zu 400 Nm geeignet. Der Motor kann klein und kompakt sein. Der Schwenkantrieb wird insbesondere zur Betätigung von Klappen und Kugelhähnen eingesetzt.

## Patentansprüche

1. Schwenkantrieb in einem Gehäuse (10) mit einem Motor (1) zum Erzeugen einer Antriebskraft, die über eine Getriebeeinrichtung (3, 4) zu einer Linearbewegungseinrichtung (5, 6) übertragen wird, deren lineare Bewegung über eine Schwinge (7) in eine vorbestimmte Drehbewegung einer an der Schwinge (7) gelagerten Schwenkeinrichtung (7A) umgewandelt wird, **dadurch gekennzeichnet, dass** die Schwenkeinrichtung (7A) mit einer im Gehäuse (10) angebrachten Nabe (9) in Verbindung steht, als kompakt verschraubtes Schwingengehäuse ausgebildet ist und mit Führungsrollen versehen ist, mit welchen die Schwenkeinrichtung (7A) bei einer Bewegung der Schwinge (7) an deren Äußeren geführt wird.

2. Schwenkantrieb nach Anspruch 1, **dadurch gekennzeichnet, dass** die vorbestimmte Drehbewegung über einen Winkel von im Wesentlichen 90° erfolgt.

3. Schwenkantrieb nach Anspruch 1 oder 2, **dadurch gekennzeichnet, dass** die Getriebeeinrichtung (3, 4) ein mit dem Motor (1) über einen Transaxialantrieb (2) in Verbindung stehendes Getriebe (3) und ein mit diesem in Verbindung stehenden Zahnflachriemenantrieb (4) aufweist.

4. Schwenkantrieb nach einem der vorhergehenden Ansprüche, **dadurch gekennzeichnet, dass** die Linearbewegungseinrichtung (5, 6) eine durch den Zahnflachriemenantrieb (4) drehend angetriebene Kugelrollspindel (5) und eine auf dieser laufende Kugelgewindemutter (6) aufweist.

5. Schwenkantrieb nach Anspruch 4, **dadurch gekennzeichnet, dass** die Schwinge (7) an ihrem einen Ende drehbar an der Kugelgewindemutter (6) gelagert ist und in ihrer Längsrichtung eine Führungsöffnung zur Führung der Schwinge (7) um die Nabe (9) aufweist.

6. Schwenkantrieb nach Anspruch 5, **dadurch gekennzeichnet, dass** die Nabe (9) im Gehäuse (10) in einer Aufnahme angebracht ist.

7. Schwenkantrieb nach Anspruch 6, **dadurch gekennzeichnet, dass** die Nabe (9) eine Verzahnung aufweist.

8. Schwenkantrieb nach Anspruch 7, **dadurch gekennzeichnet, dass** die Verzahnung acht Zähne aufweist.

9. Schwenkantrieb nach einem der vorangehenden Ansprüche, **dadurch gekennzeichnet, dass** eine Positionserfassungseinrichtung (8A, 8B) vorgesehen ist, die Endpositionen der Linearbewegungseinrichtung (5, 6) erfasst und eine Richtungsumkehr der linearen Bewegung veranlasst.

10. Schwenkantrieb nach Anspruch 9, **dadurch gekennzeichnet, dass** die Positionserfassungseinrichtung (8A, 8B) einen elektrischen Kontaktschalter aufweist.

11. Schwenkantrieb nach einem der Ansprüche 5 bis 10, **dadurch gekennzeichnet, dass** ein Anschlussstück der Nabe (9) zur Verbindung der Schwenkeinrichtung (7A) mit einer durch den Schwenkantrieb zu betätigenden Armatur vorgesehen ist.

12. Schwenkantrieb nach einem der vorhergehenden Ansprüche, wobei im Gehäuse (10) ein Kasten (12) für die erforderliche Elektronik vorgesehen ist.

## Claims

1. Drive for pivoting movement, in a housing (10), having a motor (1) for producing a driving force which is transmitted, via transmission means (3, 4), to an arrangement for linear movement (5, 6) whose linear movement is converted by means of a swinging arm (7) into a predetermined rotary movement of a pivoter assembly (7A) mounted on the swinging arm (7), **characterised in that** the pivoter assembly (7A) is connected to a hub (9) mounted in the housing (10), takes the form of a compact, screwed, enclosure for the swinging arm (7), and is provided with guiding rollers by which the pivoter assembly (7A) is guided on the exterior of the swinging arm (7) when the latter moves.

2. Drive for pivoting movement according to claim 1, **characterised in that** the predetermined rotary movement takes place over an angle of substantially 90°.

3. Drive for pivoting movement according to claim 1 or 2, **characterised in that** the transmission means (3, 4) has a gearbox (3) which is connected to the motor (1) by an transaxle drive (2), and a toothed-flat-belt drive (4) which is connected to the gearbox (3).

4. Drive for pivoting movement according to one of the preceding claims, **characterised in that** the arrangement for linear movement (5, 6) has a ball screw (5) which is driven in rotation by the toothed-flat-belt drive (4), and a feed nut (6) which runs on the ball screw (5).

5. Drive for pivoting movement according to claim 4, **characterised in that** the swinging arm (7) is rotatably mounted on the feed nut (6) at one end and has, in its longitudinal direction, a guiding opening to guide the swinging arm (7) about the hub (9).

6. Drive for pivoting movement according to claim 5, **characterised in that** the hub (9) is mounted in the housing (10) in a receptacle.

7. Drive for pivoting movement according to claim 6, **characterised in that** the hub (9) has a set of teeth.

8. Drive for pivoting movement according to claim 7, **characterised in that** the set of teeth has eight teeth.

9. Drive for pivoting movement according to one of the preceding claims, **characterised in that** a position-sensing arrangement (8A, 8B) is provided which senses the end-positions of the arrangement for linear movement (5, 6) and which causes a change in the direction of the linear movement.

10. Drive for pivoting movement according to claim 9, **characterised in that** the position-sensing arrangement (8A, 8B) has an electrical contact-sensing switch.

11. Drive for pivoting movement according to one of claims 5 to 10, **characterised in that** a connecting piece on the hub (9) is provided to connect the pivoter assembly (7A) to a valve to be actuated by the drive for pivoting movement.

12. Drive for pivoting movement according to one of the preceding claims, **characterised in that** a box (12) for the electronics required is provided in the housing (10).

## Revendications

1. Entraînement pivotant dans un boîtier (10) avec un moteur (1) pour produire une force d'entraînement, qui est transmise via un équipement d'engrenage (3, 4) à un équipement à mouvement linéaire (5, 6), dont le mouvement linéaire est converti, via une coulisse (7), en un mouvement rotatif prédéterminé d'un mécanisme pivotant (7A) logé sur la coulisse (7), **caractérisé en ce que** le mécanisme pivotant (7A) se trouve en liaison avec un moyeu (9) disposé dans le boîtier (10), **en ce qu'**il est conçu comme un boîtier de coulisse compact vissé et pourvu de galets de guidage, à l'aide desquels le mécanisme pivotant (7A) est guidé, lors d'un mouvement de la coulisse (7) sur l'extérieur de celle-ci.

2. Entraînement pivotant suivant la revendication 1, **caractérisé en ce que** le mouvement rotatif prédéterminé se déroule de manière à décrire un angle de 90° essentiellement.

3. Entraînement suivant la revendication 1 ou 2, **caractérisé en ce que** l'équipement d'engrenage (3, 4) présente un engrenage 3 se trouvant en liaison avec le moteur (1), via un entraînement transaxial (2), ainsi qu'un entraînement par courroie dentée se trouvant en liaison avec l'engrenage 3.

4. Entraînement pivotant suivant une des revendications précédentes, **caractérisé en ce que** l'équipement à mouvement linéaire (5, 6) présente une broche filetée à billes (5) entraînée en rotation par l'entraînement à courroie dentée (4) et un écrou à billes (6) se déplaçant sur la broche filetée à billes (5).

5. Entraînement pivotant suivant la revendication 4, **caractérisé en ce qu'**au niveau d'une de ses extrémités, la coulisse (7) est logée rotative sur l'écrou à billes (6) et **en ce qu'**elle présente, dans son sens longitudinal, une ouverture de guidage pour le guidage de la coulisse (7) autour du moyeu (9).

6. Entraînement pivotant suivant la revendication 5, **caractérisé en ce que** le moyeu (9) est disposé dans le boîtier (10), dans une réception.

7. Entraînement suivant la revendication 6, **caractérisé en ce que** le moyeu (9) présente une denture.

8. Entraînement suivant la revendication 6, **caractérisé en ce que** la denture présente huit dents.

9. Entraînement suivant une des revendications précédentes, **caractérisé en ce qu'**un dispositif de capture de position (8A, 8B) est prévu, qui capte les positions extrêmes de l'équipement à mouvement linéaire (5,6) et provoque un inversement de direction du mouvement linéaire.

10. Entraînement suivant la revendication 9, **caractérisé en ce que** le dispositif de capture de positions (8A, 8B) présente un contacteur électrique.

11. Entraînement suivant une des revendications 5 à 10, **caractérisé en ce qu'**un élément de raccordement du moyeu (9) est prévu pour relier le mécanisme pivotant (7A) à une armature à actionner par l'entraînement pivotant.

12. Entraînement suivant une des revendications précédentes, un caisson (12) pour l'électronique nécessaire étant prévu dans le boîtier (10).
